# EUROPEAN PATENT APPLICATION

(11) **EP 4 772 834 A1**
(43) Date of publication of application: **08.07.2026**
(21) Application number: 24872204.3
(22) Date of filing: 24.09.2024
(51) Int. Cl.: G01C 15/00

(54) **THREE-DIMENSIONAL DATA MEASURING SYSTEM AND THREE-DIMENSIONAL DATA MEASURING METHOD**

(30) Priority: 29.09.2023 JP 2023170444
(71) Applicant: Topcon Corporation, Tokyo 174-8580 (JP)
(72) Inventor: MOMIYAMA, Homare, Tokyo 174-8580 (JP); SASAKI, You, Tokyo 174-8580 (JP); KOMAGAMINE, Kunpei, Tokyo 174-8580 (JP)
(74) Representative: Schmitt-Nilson Schraud Waibel Wohlfrom Patentanwälte Partnerschaft mbB
(86) International application number: PCT/JP2024/033980
(87) International publication number: WO 2025/070415

(57) **Abstract**

Provided is a three-dimensional data measuring system 1 that enables efficient three-dimensional data measurement without a pole. The system 1 comprises a measuring module 50 including a prism 51, an electronic distance meter 52, an inertial measurement unit 53 configured to detect posture information, a communication unit 58 configured to receive prism position coordinates, and a control arithmetic unit 60 configured to calculate a position of the measuring module 50 based on the prism position coordinates and the posture information to calculate a position coordinates of an irradiated point of the measuring module 50 based on the calculated position of the measuring module 50, a distance to the irradiated point, and the posture information; and a surveying instrument 10 configured to measure a distance to and an angle of the prism 51 to acquire the prism position coordinates and transmit the prism position coordinates to the communication unit 58. When a measurement range exceeds a measurable range where the measuring module 50 performs measurement with a required accuracy without travelling, the system 1 partitions the measurement range into sections in a mesh manner each section having dimensions within the measurement range and sets a measurement route in a guidance data to minimize a travel distance of the measuring module 50, to perform measurement according to the guidance data.

## Description

### TECHNICAL FIELD

The disclosure relates to three-dimensional data measuring systems, and more particularly, to a three-dimensional data measuring system and a three-dimensional data measuring method using a measuring module equipped with a prism and a surveying instrument.

### BACKGROUND

Three-dimensional data measuring systems have been conventionally used for "current surface measurement". Such measuring systems, comprising a total station having an auto-tracking function and a prism-equipped pole allow an operator to measure a measurement point by just placing the pole on the point while the total station automatically tracks the prism to measure the position coordinates of the prism. During the measurement, the operator is required to maintain the prism in a horizontal orientation by observing a bubble-level device attached to the prism or the pole. Thus, this operation imposes a significant burden on the operator, particularly when working hours are long. In addition, such systems require the operator to know the length of the pole in advance and input the value thereof into the system.

Patent literature 1 has disclosed a three-dimensional data measuring system comprising a Global Navigation Satellite System (GNSS) receiver, a tilt sensor, an azimuth sensor, and an electronic distance meter configured to measure a three-dimensional position of a point irradiated by the electronic distance meter without using a total station or a pole.

### Citation List

### Patent Literature

Patent Literature 1: JP 2007/248156 A1

### SUMMARY

### Technical Problem

The three-dimensional data measuring system disclosed in Patent Literature 1 enables measurement without using a pole but fails to allow measurement in indoor environments due to poor satellite-signal reception. In addition, even in outdoor environments with strong satellite-signal reception, the timing of measurement, which affects the number of available satellites or the geometric location of satellites, may deteriorate the accuracy of the measurement. Furthermore, a demand exists for more accurate measurement eliminating the need for a pole.

The present disclosure has been made in view of the above circumstances, and an object thereof is to provide a three-dimensional data measuring system and a three-dimensional data measuring method that enable efficient acquisition of three-dimensional data without using a prism-equipped pole or a GNSS device.

### Solution to Problem

To achieve the above object, an aspect of a three-dimensional data measuring system according to the present disclosure has the following configurations.
1. A three-dimensional data measuring system comprises a measuring module including a prism that retroreflects incident light, an electronic distance meter configured to emit distance-measuring light toward a measurement range and receive reflected distance-measuring light from an irradiated point of the distance-measuring light, and to detect a distance to the irradiated point, an inertial measurement unit that detects posture information, a communication unit configured to receive prism position coordinates, and, a control arithmetic unit configured to calculate position coordinates of the measuring module based on the prism position coordinates and the posture information, and calculate position coordinates of the irradiated point based on the position coordinates of the measuring module, the distance to the irradiated point, and the posture information; and a surveying instrument configured to measure a distance to and angle of the prism to acquire the prism position coordinates, and transmit the prism position coordinates to the communication unit. The system is configured to acquire three-dimensional data of the measurement range. The system is configured to, when the measurement range exceeds a measurable range in which the measuring module can measure a distance with a required accuracy, partition the measurement range into sections in a mesh manner each section having dimensions within the measurable range, and perform measurement according to a guidance data in which a measurement route is set to minimize a travel distance of the measuring module among the sections.
2. In the above aspect 1, it is preferable that the measurement route that minimizes the travel distance is a route that connects centers of all sections in a single stroke and includes fewest turns.
3. In the above aspects 1 and 2, it is preferable that the measurable range is set depending on a distance between positions of the measuring module and the irradiated point on a measurement surface when the distance-measuring light impinges on the measurement surface at a threshold of incident angle, and the threshold is set depending on the required accuracy.
4. In the above aspects 1 to 3, it is preferable that the measurable range is set depending on a three-dimensional shape of a measurement surface.
5. In the above aspects 1 to 4, it is preferable to further comprise a display unit, and that the control arithmetic unit is configured to display a guidance marker on the display unit to guide an operator who is holding the measuring module to travel in a traveling direction of measurement route set on the guidance data.
6. In the above aspects 1 to 5, it is preferable that the control arithmetic unit is configured to notify an operator if an unmeasured scheduled measurement point remains behind a current location of the measuring module in a traveling direction of the measurement route during measurement.
7. Further, another aspect of a three-dimensional data measuring method according to the present disclosure is a three-dimensional data measuring method using a three-dimensional data measuring system including: a measuring module including a prism that retroreflects incident light, an electronic distance meter configured to emit distance-measuring light toward a measurement range and receive reflected distance-measuring light from an irradiated point of the distance-measuring light, and to detect a distance to the irradiated point, an inertial measurement unit that detects posture information, a communication unit configured to receive prism position coordinates, and, a control arithmetic unit configured to calculate position coordinates of the measuring module based on the prism position coordinates and the posture information to calculate position coordinates of the irradiated point based on the position coordinates of the measuring module, the distance to the irradiated point, and the posture information; and a surveying instrument configured to measure a distance to and angle of the prism to acquire the prism position coordinates, and transmit the prism position coordinates to the communication unit, the system configured to acquire three-dimensional data of the measurement range. The method comprising: partitioning the measurement range into sections in a mesh manner each section having dimensions within the measurable range when the measurement range exceeds a measurable range in which the measuring module can measure a distance with a required accuracy, and performing measurement according to a guidance data in which a measurement route is set to minimize a travel distance of the measuring module among the sections.

### BRIEF DESCRIPTION OF DRAWINGS

FIG. 1 illustrates a schematic configuration of a three-dimensional data measuring system according to an embodiment of the present invention.
FIG. 2 is a block diagram illustrating a measuring module and a surveying instrument that constitute the three-dimensional data measuring system.
FIGS. 3A-3C illustrate relationships between an emission angle of distance-measuring light from the measuring module, an incident angle thereof onto a measurement surface, and a beam spot shape thereof.
FIG. 4A illustrates a threshold of the incident angle for setting a measurable area of the measuring module. FIG. 4B illustrates an example of how to set the measurement range.
FIG. 5 is a flowchart of an example of processing of generating guidance data for three-dimensional data measurement using the measuring system.
FIG. 6 illustrates how to set a measurement range in survey area data, which is used in the measuring system.
FIGS. 7A-7E illustrates operations of generating guidance data when the measurement range exceeds a measurable range.
FIGS. 8A and 8B illustrate operations of generating guidance data when the measurement range falls within the measurable range.
FIG. 9 is a flowchart illustrating a basic operation of the measuring module when using the system.
FIG. 10 is a flowchart illustrating an example of processing of three-dimensional data measurement using the system.
FIGS. 11A-11C illustrate measurement screens displayed on the display unit of the measuring module during the three-dimensional data measurement.
FIGS. 12A-12C illustrate measurement screens displayed on the display of the measuring module during the three-dimensional data measurement.
FIG. 13 is a flowchart illustrating another example of the processing of three-dimensional data measurement using the system.

### ADVANTAGES OF INVENTION

According to the above aspects, efficient three-dimensional measurement can be performed without use of a prism-equipped pole or a GNSS device.

### DESCRIPTION OF EMBODIMENTS

Hereinafter, preferred embodiments of the present invention will be described with reference to the drawings, but the present invention is not limited thereto. In each embodiment, the same constituents are denoted by the same reference signs, and redundant description will be omitted.

### I. Embodiment

### 1. Overall construction

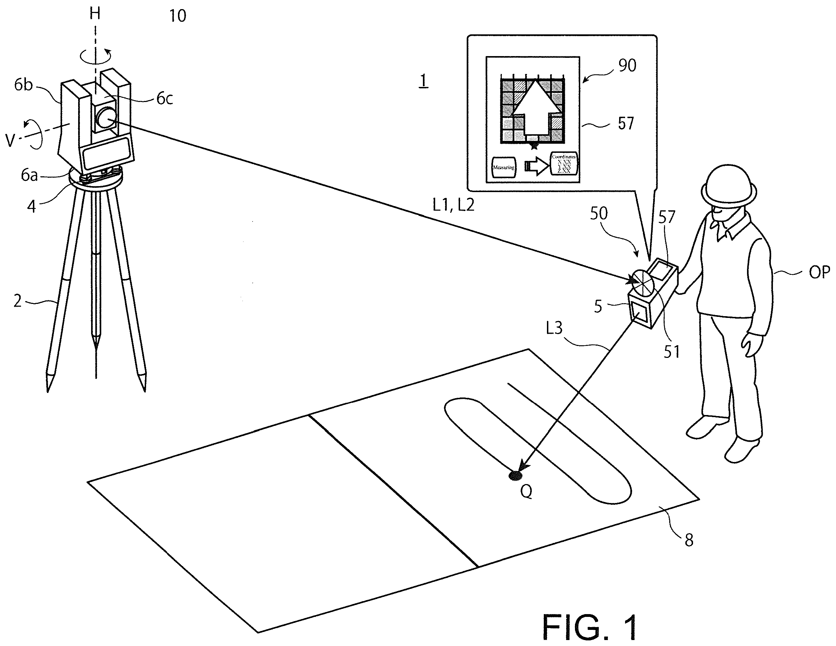

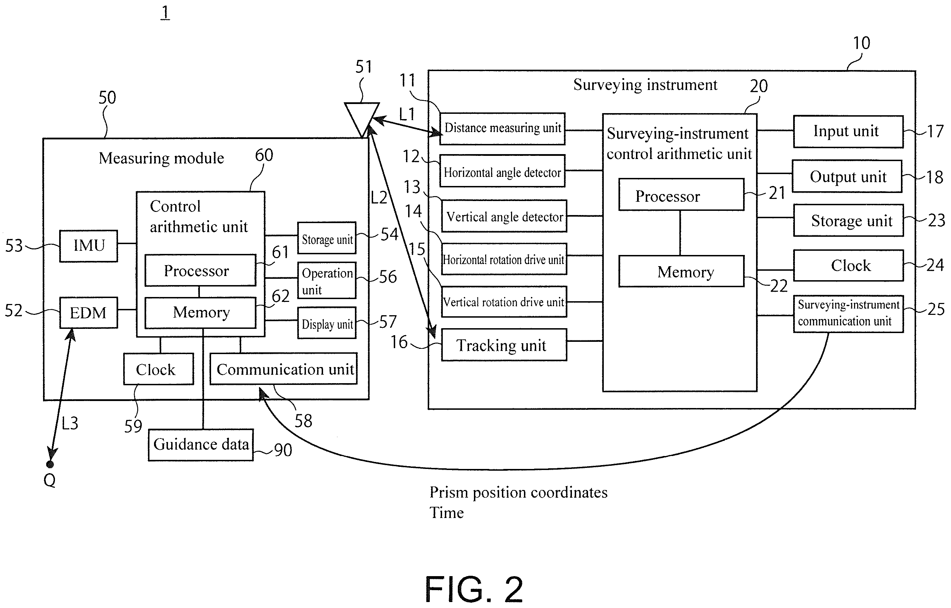

FIG. 1 illustrates a schematic configuration of a three-dimensional data measuring system 1 (hereinafter, simply referred to as "system 1"). The system 1 is preferably configured for current surface measurement at a construction site. FIG. 2 is a configuration block diagram of the system 1. The system 1 generally comprises a surveying instrument 10 and a measuring module 50.

In the illustrated example, the surveying instrument 10 is a motor-driven total station with an auto-tracking function. The surveying instrument 10 is installed at a known point with known coordinates and a known orientation angle. Note that, in the present detailed description, the expression "install a surveying instrument at a known point" represents not only installing the surveying instrument at a known point but also installing the surveying instrument at an arbitrary point whose coordinates can be determined by backward intersection or other methods.

As illustrated in FIG. 1, the surveying instrument 10 comprises, a base portion 6a, a bracket portion 6b configured to rotate horizontally about an H axis with respect to the base portion 6a, and a telescope 6c configured to rotate vertically about a V axis at the center of the bracket portion 6b. The base portion 6a is mounted on a leveling stand 4, which is attached to a tripod 2.

The measuring module 50 includes a housing 5 having a substantially rectangular parallelepiped shape and sized to be handheld. The housing 5 includes a prism 51 fixed to a front portion of the upper surface thereof. The prism 51 will be described later. The housing 5 also includes a display unit 57 disposed on a rear portion of the upper surface. The display unit 57 will be described later. This configuration allows an operator OP to irradiate a measurement target with distance-measuring light L3 while monitoring the display unit 57. The measuring module 50 has a guidance data 90, which will be described later, to enable measurement according to the guidance data 90.

### 2. Surveying Instrument 10

As illustrated in FIG. 2, the surveying instrument 10 comprises a distance-measuring unit 11, a horizontal angle detector 12, a vertical angle detector 13, a horizontal rotation drive unit 14, a vertical rotation drive unit 15, a tracking unit 16, an input unit 17, an output unit 18, a surveying-instrument control arithmetic unit 20, a storage unit 23, a clock 24, and a surveying-instrument communication unit 25.

The distance-measuring unit 11 comprises a light transmitting unit, a distance measuring optical system, and a light receiving unit, which are not illustrated in FIG.2. The light transmitting unit includes a light emitting element such as a laser diode, which emits laser light as distance-measuring light L1. The light receiving unit includes a light receiving element such as avalanche photodiode. The distance-measuring unit 11, housed in the telescope 6c, is configured with the optical axis of the distance-measuring light L1 that coincides with the collimation axis of the telescope 6c.The distance-measuring unit 11 emits the distance-measuring light, such as infrared laser light, toward the prism 51 via the distance-measuring optical system and receives reflected light with the light receiving unit to measure a distance to the center of the prism 51 based on a phase difference or a time difference between the distance-measuring light and internal reference light.

The horizontal angle detector 12 and the vertical angle detector 13 are each implemented using an absolute encoder or an incremental encoder. The horizontal angle detector 12 detects a horizontal angle of the base portion 6a, that is, a horizontal angle of the collimation axis of the telescope 6c. The vertical angle detector 13 detects a vertical angle of the collimation axis of the telescope 6c.

The horizontal rotation drive unit 14 and the vertical rotation drive unit 15 are each implemented using a motor. The surveying-instrument control arithmetic unit 20 controls the horizontal rotation drive unit 14 and the vertical rotation drive unit 15. The horizontal rotation drive unit 14 drives a rotation shaft, provided on the base portion 6a, to horizontally rotate the bracket portion 6b. The vertical rotation drive unit 15 drives a rotation shaft, which supports the telescope 6c rotatably with respect to the bracket portion 6b, to vertically rotate the telescope 6c. Both of the drive units cooperatively rotate the telescope 6c in horizontal and vertical directions.

The tracking unit 16 comprises a tracking light transmitting unit, a tracking optical system, and a tracking light receiving unit, which are not illustrated in FIG.2. The tracking light transmitting unit includes a light emitting element such as a laser diode. The tracking light receiving unit includes a light receiving element such as a charge-coupled device (CCD) or a complementary metal-oxide-semiconductor (CMOS). The tracking unit 16 emits infrared laser light as tracking light L2, which has a wavelength different from that of the distance-measuring light L1. The tracking unit 16 captures landscape images in the direction of the collimation axis, including images captured with the tracking light L2 turned on and images captured with the tracking light L2 turned off. The tracking unit 16 provides both images to the surveying-instrument control arithmetic unit 20. The surveying-instrument control arithmetic unit 20 determines the center position of an image of the prism 51 which serves as the surveying target based on the difference between the two images and then calculates a position of the prism 51. Based on the calculated position of the prism 51, the surveying-instrument control arithmetic unit 20 instructs the horizontal rotation drive unit 14 and the vertical rotation drive unit 15 to maintain the center of the prism 51 in alignment with the collimation axis of the telescope 6c. This allows the telescope 6c to continuously point toward the prism 51.

The input unit 17 is an input device such as buttons and keys, to receive inputs from an operator, such as commands or configuration settings for measurement tasks and output the inputs to the surveying-instrument control arithmetic unit 20. The output unit 18 is a device that serves as a display for an operator, such as a liquid crystal display. The output unit 18 displays screens, such as a measurement condition setting screen and a measurement result check screen, under the control of the surveying-instrument control arithmetic unit 20. The input unit 17 and the output unit 18 may be integrated into a touch panel display.

The storage unit 23 is implemented using a computer-readable storage medium such as a hard disc drive (HDD) or a flash memory. The storage unit 23 stores programs for the surveying instrument 10 to execute various functions, such as a surveying function and the auto-tracking function. The storage unit 23 also stores various types of data, such as measurement data, acquired by the surveying instrument 10.

The clock 24 may be implemented using a system clock or a hardware clock. The clock 24 assigns timestamps to transmitted data to synchronize measurement timing with the measuring module 50.

The surveying-instrument communication unit 25 is a communication interface that facilitates information exchange between the surveying instrument 10 and the measuring module 50. Examples of communication means include Wi-Fi, Bluetooth (each a registered trademark), and infrared communication. The communication means are not limited thereto and may be implemented using other methods compliant with known wired and wireless communication standards. The surveying instrument 10 assigns timestamps to measurement result data of the prism measurement, which include position coordinates of the prism, and transmits the measurement result data to the measuring module 50 via the surveying-instrument communication unit 25.

The surveying-instrument control arithmetic unit 20 comprises at least one processor 21 and at least one memory 22. The processor 21 may be implemented using a central processing unit (CPU), for example. The memory 22 may be implemented using a static random-access memory (SRAM) or a dynamic random-access memory (DRAM), for example. When the processor 21 is implemented using a processor such as a CPU that executes functions of the surveying instrument 10 in software, the surveying-instrument control arithmetic unit 20 reads programs for implementing functions into the memory 22 and executes the programs to implement the functions.

In addition, the processor 21 may be implemented at least partially in hardware by using a complex programmable logic device (CPLD) or a field programmable gate array (FPGA).

The surveying-instrument control arithmetic unit 20 controls the tracking unit 16, the horizontal rotation drive unit 14, and the vertical rotation drive unit 15 so that the surveying instrument 10 automatically tracks the prism 51. The surveying-instrument control arithmetic unit 20 controls the distance-measuring unit 11, the horizontal angle detector 12, and the vertical angle detector 13 so that the surveying instrument 10 measures a distance to and an angle of the prism 51 at predetermined timing. Based on the distance and angle measurements of the prism 51, the surveying-instrument control arithmetic unit 20 calculates position coordinates of the center of the prism 51, assigns a timestamp to the calculation result, and transmits the result to the measuring module 50 via the surveying-instrument communication unit 25.

### 3. Configuration of Measuring Module 50

The measuring module 50 comprises the prism 51, an electronic distance meter (EDM) 52, an inertial measurement unit (IMU) 53, a storage unit 54, an operation unit 56, the display unit 57, a communication unit 58, a clock 59, and a control arithmetic unit 60. In addition, the measuring module 50 may further comprise a speaker that outputs audio.

The prism 51 is, for example, a so-called omnidirectional prism, formed by radially arranging a plurality of triangular pyramidal prisms to retroreflect incident light from all directions (360°). The prism 51 is not limited thereto and may be any prism used for surveying.

The electronic distance meter 52 comprises a light transmitting unit, a distance-measuring optical system, and a light receiving unit, which are not illustrated in FIG. 2. The light transmitting unit includes a light emitting element such as a laser diode and emits visible laser light as the distance-measuring light L3. The light receiving unit includes a light receiving element, such as an avalanche photodiode. The electronic distance meter 52 emits the distance-measuring light L3 from the light transmitting unit toward a measurement target and receives reflected distance-measuring light L3' from the measurement target. The electronic distance meter 52 determines the distance to a point irradiated with the distance-measuring light L3 based on a phase difference or a time difference between the distance-measuring light L3 and internal reference light. After starting measurement, the electronic distance meter 52 emits the distance-measuring light L3 continuously or at predetermined intervals.

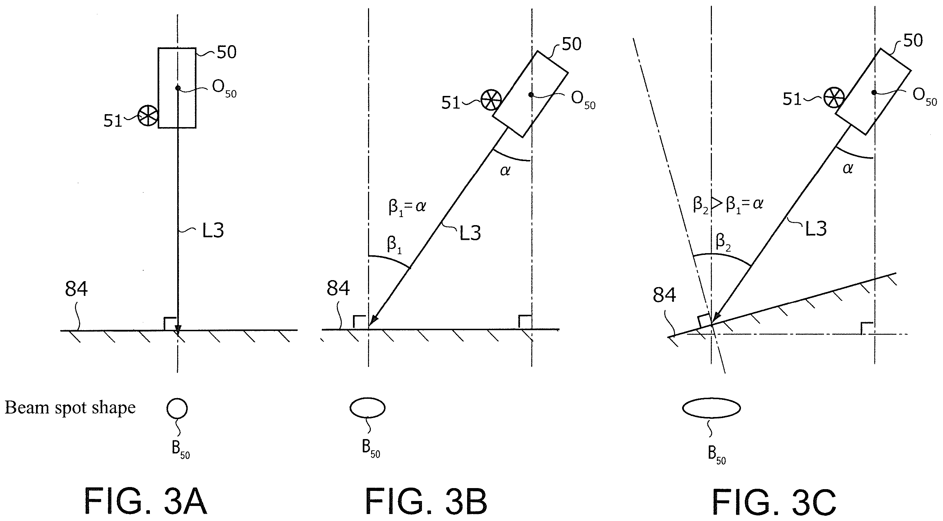

The inertial measurement unit 53 comprises a three-axis gyroscope and a three-axis accelerometer. The inertial measurement unit 53 detects posture information of the measuring module 50 by measuring angular velocities and accelerations in three axes (roll, pitch, and yaw) of the measuring module 50. The inertial measurement unit 53 is placed at the instrument center O₅₀ (FIG. 3) of the measuring module 50.

The positional relationship is predetermined among the center of the prism 51, the origin for distance measurement by the electronic distance meter 52, and the instrument center O₅₀. This allows the determination of position coordinates of the instrument center O₅₀, that is, position coordinates of the measuring module 50, based on position coordinates of the center of the prism 51 and the posture information of the measuring module 50.

The storage unit 54 is implemented using a computer-readable storage medium such as a hard disk drive (HDD) or a flash memory. The storage unit 54 stores programs for executing functions of the measuring module 50, which will be described later. The storage unit 54 also stores three-dimensional information data, acquired by the measuring module 50.

The operation unit 56 is an input device that includes an input mechanism, such as buttons and keys, to receive inputs from the operator, such as commands or configuration setting for the measuring module 50. The display unit 57 is implemented with a display such as a liquid crystal display or an organic electroluminescence (EL) display. The display unit 57 displays various screens such as input screens for measurement condition setting or a measurement screen 70, under the control of the control arithmetic unit 60. In the illustrated example, the operation unit 56 and the display unit 57 are integrated as a touch panel display. Furthermore, the operation unit 56 may include an audio input device such as a microphone in addition to buttons and keys. The measurement screen 70 displays various information, such as measurement routes, the position of the measuring module 50, and the position of the irradiated point Q, superimposed on survey area data, as described later.

The communication unit 58 is a communication interface that facilitates information exchange between the surveying instrument 10 and the measuring module 50. Although examples of communication means include Wi-Fi, Bluetooth (each a registered trademark), and infrared communication, any communication means compatible with the surveying-instrument communication unit 25 should be used. The communication unit 58 receives the position coordinates of the prism 51 from the surveying instrument 10.

The clock 59 is a device that keeps time and may be implemented with a system clock or a hardware clock. The clock 59 is synchronized with the clock 24 of the surveying instrument 10 and used for synchronizing measurement timing with the surveying instrument 10.

The control arithmetic unit 60 includes at least one processor 61, such as a CPU, and at least one memory 62, such as an SRAM or a DRAM. When the processor 61 executes functions of the surveying instrument 10 in software, the control arithmetic unit 60 reads programs for implementing functions of the measuring module 50 into the memory 62 and executes the programs to implement the functions. The processor 61 may be implemented at least partially in hardware by using a CPLD or an FPGA.

The control arithmetic unit 60 enables remote control of the surveying instrument 10, particularly, by sending instructions for measurement and auto-tracking to the surveying instrument 10 via the communication unit 58. The control arithmetic unit 60 acquires, in synchronization with the surveying instrument 10, the distance to the irradiated point, which is measured by the electronic distance meter 52, and the posture information of the measuring module 50, which is detected by the inertial measurement unit 53. The control arithmetic unit 60 calculates position coordinates of the measuring module 50 based on the position coordinates of the prism 51 received from the surveying instrument 10, the detected posture information of the measuring module 50, and the predetermined positional relationship between the prism 51 and the instrument center O₅₀ of the measuring module 50. The control arithmetic unit 60 also calculates position coordinates of the irradiated point Q of the distance-measurement light L3 based on the calculated position coordinates and the detected posture information of the measuring module 50, and distance value measured by the electronic distance meter 52. The control arithmetic unit 60 also determines whether the irradiated point Q falls within a scheduled-measurement-point range 83. The scheduled-measurement-point range 83 is defined as a predetermined distance range from a scheduled measurement point 82, which is a point to be measured. When determining that the irradiated point Q falls within the scheduled-measurement-point range 83, the control arithmetic unit 60 initiates measurement and records a measured value as a measurement result.

The control arithmetic unit 60 generates the guidance data 90 from survey area data 7a, by partitioning a measurement range 80 into sections in a mesh manner each section having dimensions within a measurable range 87, each section being referred to as a "large section," and by setting a measurement sequence among the large sections. The measurable range 87 defines a range measurable by the measuring module 50 while the operator OP holding the measuring module 50 remains in place. The control arithmetic unit 60 sets a measurement route 89 in the guidance data 90 to minimize the travel distance of the operator OP. Further details of the generation of the guidance data 90 will be described later. The control arithmetic unit 60 directs the operator OP by displaying a guidance marker 94 on the display unit 57 to guide the operator OP to perform measurement according to the measurement route 89 set in the guidance data 90. The control arithmetic unit 60 also displays survey progress on the display unit 57 in a manner that measured sections and unmeasured sections are distinguishable.

### 4. Guidance data

Here, the guidance data 90 and a method for generating the guidance data 90 will be described in detail. The guidance data 90 defines the measurement route 89 to achieve efficient measurement while satisfying required accuracy. First, the following section will describe the measurable range 87, in which the operator OP holding the measuring module 50 can perform measurement without travelling while satisfying the required accuracy.

### 4-1. Measurable range 87

As described above, the measurable range 87 defines a range measurable by the measuring module 50 within which the measuring module 50 measures a target with a required accuracy while the operator OP holding the measuring module 50 remains stationary at the position without traveling to another location. In other words, it is a range that the measuring module 50 measures a target without changing the position of the measuring module 50. Since the measuring module 50 according to the present embodiment is a portable three-dimensional data measurement device including the electronic distance meter 52, the operator OP can measure a target within a certain range by changing the posture and the orientation of the measuring module 50 or by swinging the measuring module 50 outward while remaining at the current location.

Although various factors affect measurement accuracy of the measuring module 50, a particularly significant factor is the spot shape of a beam B₅₀ of the distance-measuring light L3. The spot shape of the beam B₅₀ varies depending on the incident angle at which the distance-measuring light L3 impinge on the surface of the measurement range 80 (hereinafter referred to as "measurement surface 84"). FIGS. 3A-3C illustrate relationships between the incident angle at which the distance-measuring light L3 impinges on the measurement surface 84 and the corresponding spot shape of the beam B₅₀ of the distance-measuring light L3.

In the following description, an angle between the distance-measuring light L3 and a vertically downward direction is defined as the emission angle of the distance-measuring light L3. As shown in FIG. 3A, when the measurement surface 84 is horizontal and the measuring module 50 emits the distance-measuring light L3 at an emission angle of 0° relative to the measurement surface 84, the distance-measuring light L3 impinges on the measurement surface 84 at an incident angle of 0°. In this case, the spot shape of the beam B₅₀ is substantially circular. On the other hand, as shown in FIG. 3B, when the measuring module 50 emits the distance-measuring light L3 at an emission angle α greater than 0° relative to the measurement surface 84, the incident angle β₁ is equal to the emission angle α. Here, as the emission angle α increases, the incident angle β increases, causing the spot shape of the beam B₅₀ to become a more flattened ellipse.

When the measurement surface 84 is inclined rather than horizontal, the incident angle of the distance-measuring light L3 varies depending on the inclination. For example, as shown in FIG. 3C, when the measurement surface 84 is inclined such that a plane perpendicular to the measurement surface 84 faces away from the measuring module 50, even when the measuring module 50 emits the distance-measuring light L3 at the same emission angle α as in FIG. 3B, the incident angle β₂ on the measurement surface 84 is greater than the incident angle β₁ in FIG. 3B. Accordingly, the spot shape of the beam B₅₀ becomes further flatter than that shown in FIG. 3B. Conversely, although not shown, when the measurement surface 84 is inclined in the direction opposite to that shown in FIG. 3C, the incident angle is smaller than that shown in FIG. 3B.

The foregoing description assumes that the measurement surface 84 is horizontal or inclined with respect to a horizontal plane and that the distance-measuring light L3 exits downward. However, even when the measurement surface 84 is formed on a surface other than a horizontal ground plane, such as a vertical surface or other inclined surface, the emission angle and the incident angle of the distance-measuring light L3 can be calculated with reference to a direction or a plane perpendicular to the measurement surface 84.

As the spot shape of the beam B₅₀ becomes flatter, measurement error in a measurement value of the electronic distance meter 52 increases due to variations in a received light signal. Specifically, flattening of the spot shape increases the irradiated area on the measurement surface even at the same distance, thereby causing the received light signal to contain components reflected from different distances and increasing distance measurement error. Alternatively, when the measurement surface exhibits anisotropic scattering, a greater incident angle leads to a decrease in the amount of received light, thereby lowering the signal-to-noise ratio and increasing distance measurement error. In other words, the measurement accuracy of the electronic distance meter 52 depends on the incident angle on the measurement surface 84. Furthermore, the incident angle is determined based on the emission angle of the distance-measuring light L3, which is derived from the posture information of the measuring module 50, and the three-dimensional shape of the measurement surface 84, which includes its inclination and irregularities. The incident angle β has permissible thresholds β_{TH} defined in accordance with required measurement accuracies. For example, as shown in Table 1, a threshold β_{TH1} is set for a required accuracy of 10 mm (Level 1), a threshold β_{TH2} for a required accuracy of 50 mm (Level 2), and a threshold β_{TH3} for a required accuracy of 100 mm (Level 3).

**[Table 1]**

| Table 1 Example of Setting of Threshold of Incident Angle | | |
|---|---|---|
| | Required Measurement Accuracy | Threshold |
| Lv. 1 | 10 mm | β_{TH1} |
| Lv. 2 | 50 mm | β_{TH2} |
| Lv. 3 | 100 mm | β_{TH3} |

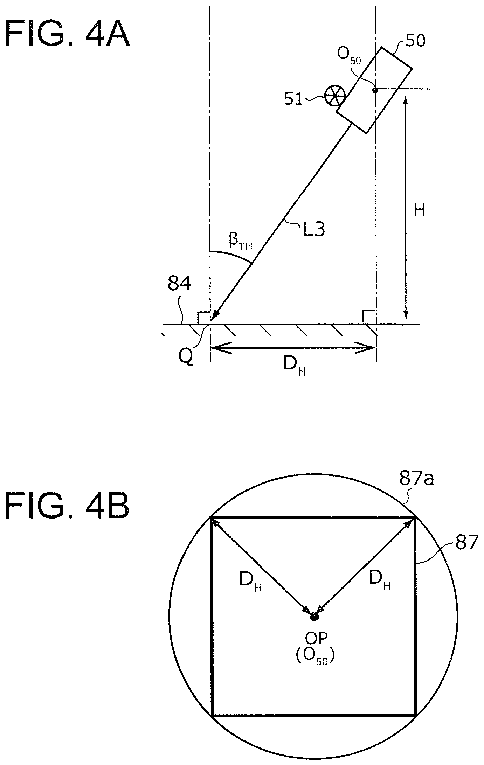

FIG. 4A illustrates a horizontal distance D_{H} between the instrument center O₅₀ and the irradiated point Q of the distance-measuring light L3 when the incident angle is the threshold β_{TH}. When the irradiated point Q falls within the range of the horizontal distance D_{H} from the instrument center O₅₀, measurement can satisfy the required accuracy. However, since the horizontal distance D_{H} varies depending on the height of the instrument center O₅₀, i.e., the distance from the measurement surface 84, it is necessary to determine the height H of the instrument center O₅₀. For example, the height H of the instrument center O₅₀ may be preset based on an average height at which the operator OP holds the measuring module 50 during normal use. Alternatively, it may be calculated based on the operator OP's height.

Approximating a measurement position as a position of the instrument center O₅₀ and assuming that the operator OP remains in place (i.e., does not move from the position) define measurement conditions. Under these conditions, swinging the measuring module 50 held in a hand within a movable range of the arm in front of the body defines a circular region having radius D_{H} centered on the position of the operator OP, as shown in FIG. 4B. The circular region represents a measurable range 87a within which the measuring module measures a target without movement of the operator OP while satisfying the required accuracy. Accordingly, a square region inscribed in the circle 87a defines the measurable range 87. Thus, the measurable range 87 is determined based on the incident angle of the distance-measuring light L3 from the measuring module 50 onto the measurement surface 84.

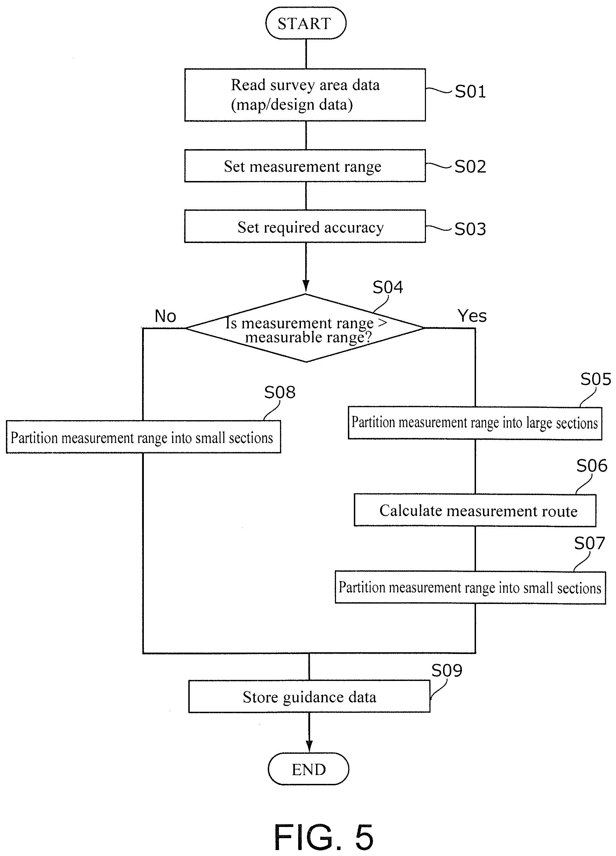

For efficient measurement, the system 1 guides the operator OP according to the guidance data 90 that includes the measurement route 89. First, an overview of a generation method of the guidance data 90 will be described with reference to FIGS. 5 to 8. FIG. 5 is a flowchart illustrating the method for generating the guidance data.

Upon starting the processing, in step S01, the control arithmetic unit 60 first reads the survey area data 7a. Specifically, the survey area data 7a is map data or Computer-Aided Design (CAD) data of a survey area 7, i.e., an area which the operator OP intends to survey. For example, the control arithmetic unit 60 may read the survey area data 7a stored in the storage unit 54. Alternatively, the control arithmetic unit 60 may read the survey area data 7a stored on a cloud server through the Internet, via the communication unit 58 or a communication interface separate from the communication unit 58.

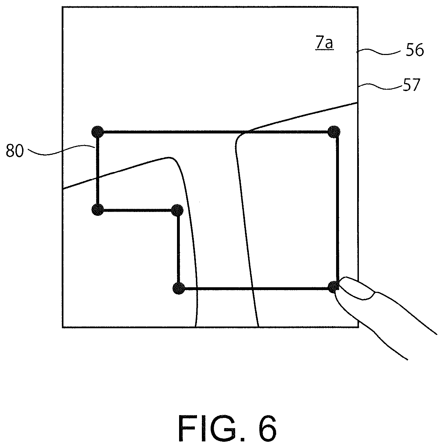

Next, in step S02, the control arithmetic unit 60 sets the measurement range 80. FIG. 6 illustrates how to set the measurement range 80, shown on the display unit 57. In the illustrated example, the survey area data 7a is map data. The measurement range 80 represents a region where three-dimensional data measurement is scheduled within the survey area 7. As illustrated in FIG. 6, the operator OP taps points on the display unit 57, which is a touch panel display, to input the points as vertices defining a polygon and select the polygon as the measurement range 80. Alternatively, the operator may use a rectangular selection tool and swipe diagonally to define a rectangular region to set the measurement range 80. Additionally, the operator OP may define a desired area having an arbitrary shape as the measurement range 80 by tracing a boundary of the desired area with a fingertip on the display unit 57 to set the area.

Next, in step S03, the control arithmetic unit 60 sets the required accuracy according to input from the operator OP. For example, the control arithmetic unit 60 may allow the operator OP to define a required accuracy level by selecting an accuracy level from a table listing accuracy levels as shown in Table 1.

Next, in step S04, the control arithmetic unit 60 compares the dimensions of the set measurement range 80 with those of the measurable range 87.

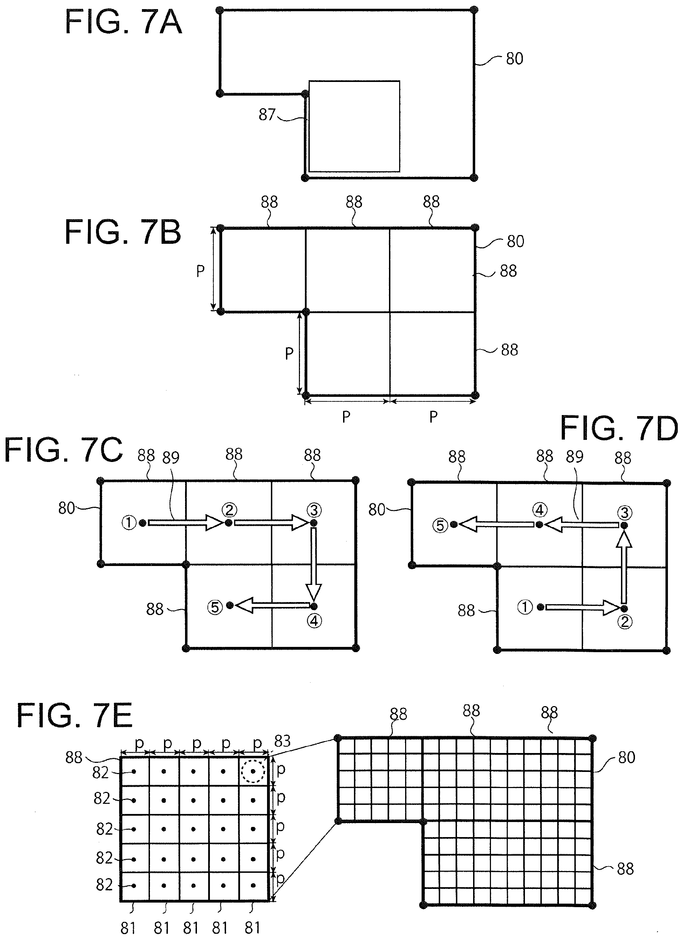

FIGS. 7A to 7E illustrate processing performed in step S04 when the measurement range 80 exceeds the measurable range 87 ("Yes" branch of step S04). As shown in FIG. 7A, when the set measurement range 80 exceeds the measurable range 87, the process proceeds to step S05. Here, the control arithmetic unit 60 partitions the measurement range 80 into sections arranged in a mesh manner at a pitch P, as shown in FIG. 7B, ensuring that the dimensions of each section fall within the measurable range 87. The sections arranged at the pitch P are the large sections 88.

Then, in step S06, the control arithmetic unit 60 calculates a measurement sequence and a measurement route 89 among the large sections 88 to minimize the travel distance of an operator OP holding the measuring module 50. The measurement route 89 that minimizes the travel distance of the operator OP, i.e., the shortest route, is, for example, a route that connects centers of all large sections in a single stroke according to the measurement sequence and includes the fewest turns. For the measurement range 80 shown in FIG. 7A, the two measurement routes 89 shown in FIGS. 7C and 7D can be the shortest routes.

Next, in step S07, as shown in FIG. 7E, the control arithmetic unit 60 partitions each large section 88 into small sections 81 in a mesh manner at a pitch p. The pitch p is preset in the control arithmetic unit 60. Although the pitch p may preferably range from 10 to 50 cm for current surface measurement in construction work, for example, the pitch p may be set as appropriate. Each small section 81 is set with a scheduled measurement point 82 at the center thereof. Each scheduled measurement point 82 has a scheduled measurement-point-range 83 defined as a predetermined area surrounding the scheduled measurement point 82. When determining the irradiated point Q falls within the scheduled-measurement-point range 83, the measuring module 50 initiates measurement and recording.

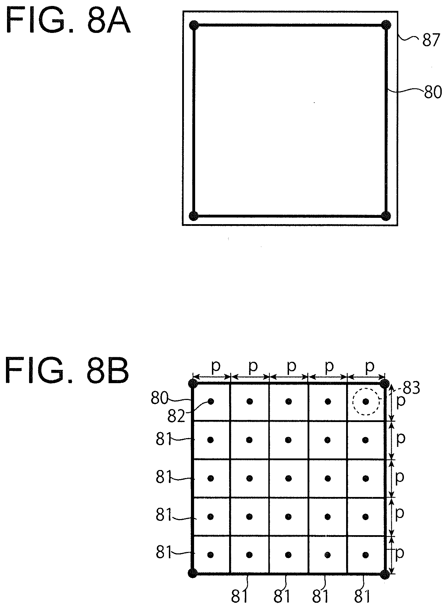

FIGS. 8A and 8B illustrate processing performed in step S04 when the measurement range 80 falls within the measurable range 87 ("No" branch of step S04). As shown in FIG. 8A, when the measurement range 80 falls within the measurable range 87, the process proceeds to step S08, and the control arithmetic unit 60 partitions the measurement range 80 into small sections 81 in a mesh manner at a pitch p, similar to step S07. Each small section 81 has also a scheduled measurement point 82 and a scheduled-measurement-point range 83.

After step S07 or step S08, in step S09, the control arithmetic unit 60 stores the guidance data 90 including the measurement route 89 for the measurement range 80 in the storage unit 54 and terminates the processing. Here, if multiple sets of guidance data 90 are available, the control arithmetic unit 60 stores the guidance data associated with the center coordinates of a first large section in the measurement sequence.

### 5. Three-Dimensional Data Measurement

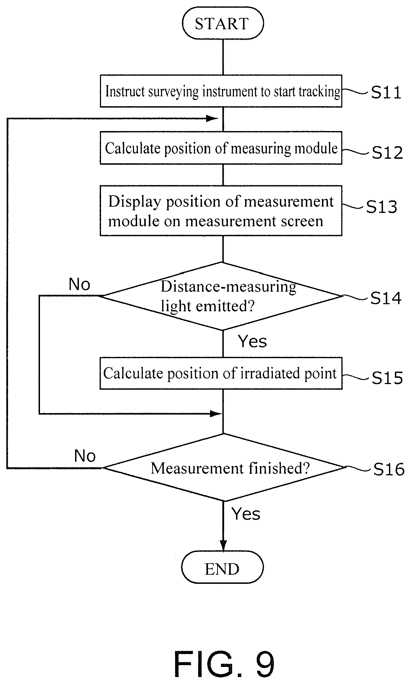

Next, the three-dimensional data measurement method using the system 1 is described. FIG. 9 is a flowchart of the basic operation of the measuring module 50 in three-dimensional data measurement using the system 1.

First, prior to use at a measurement site, the operator OP sets up the surveying instrument 10 at a known point and inputs coordinates and orientation angles into the surveying instrument 10.

The communication unit 58 of the measuring module 50 establishes a connection with the surveying-instrument communication unit 25 of the surveying instrument 10. The operator OP calibrates the measuring module 50. For calibration, for example, the operator OP positions the surveying instrument 10 and the measuring module 50 to face each other, and measures the prism 51 with the surveying instrument 10 to determine the direction of the measuring module 50. The operator OP uses the direction to set the inertial measurement unit 53 such that the roll, yaw and pitch angles thereof are zero degrees in a direction opposite to the facing direction of the measuring module 50.

Then, in step S11, the control arithmetic unit 60 instructs the surveying instrument 10 to start the basic operation via the communication unit 58. Thereafter, the surveying instrument 10 tracks the prism 51, measures the prism at predetermined intervals, and transmits position coordinates of the prism 51 with timestamps to the measuring module 50.

In step S12, the control arithmetic unit 60 acquires posture information of the measuring module 50 in synchronization with measurement of position coordinates of the prism 51 and calculates position coordinates of the instrument center O₅₀ of the measuring module 50 (the position coordinates of the instrument center O₅₀ are hereinafter also referred to as an "own location.")

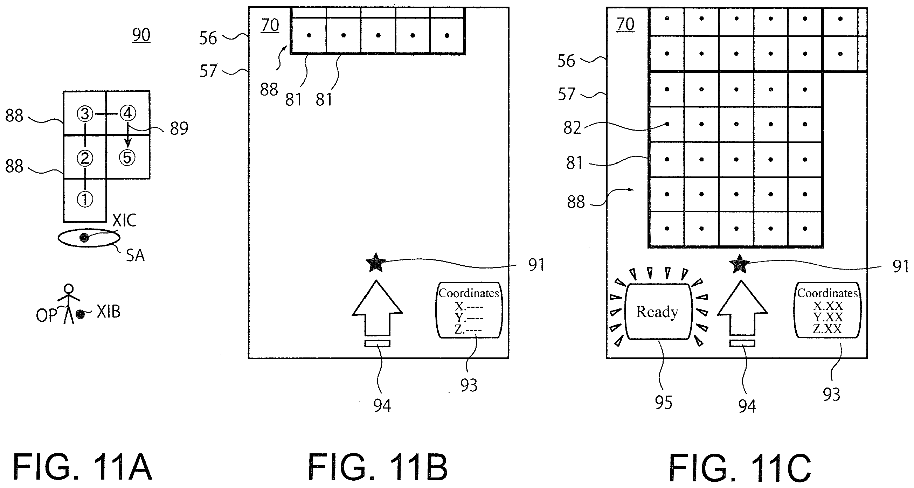

In step S13, the control arithmetic unit 60 displays the measurement screen 70 on the display unit 57. The measurement screen 70 indicates the position of the instrument center O₅₀ of the measuring module 50. Thereafter, control arithmetic unit 60 repeats steps S11 to S13. Each time receiving the position coordinates of the prism 51 or at predetermined intervals, the control arithmetic unit 60 calculates the position coordinates of the instrument center O₅₀ of the measuring module 50. The control arithmetic unit 60 displays an own-location mark 91 (FIG. 11B) on the measurement screen 70 and updates the own-location mark 91 with every new calculation.

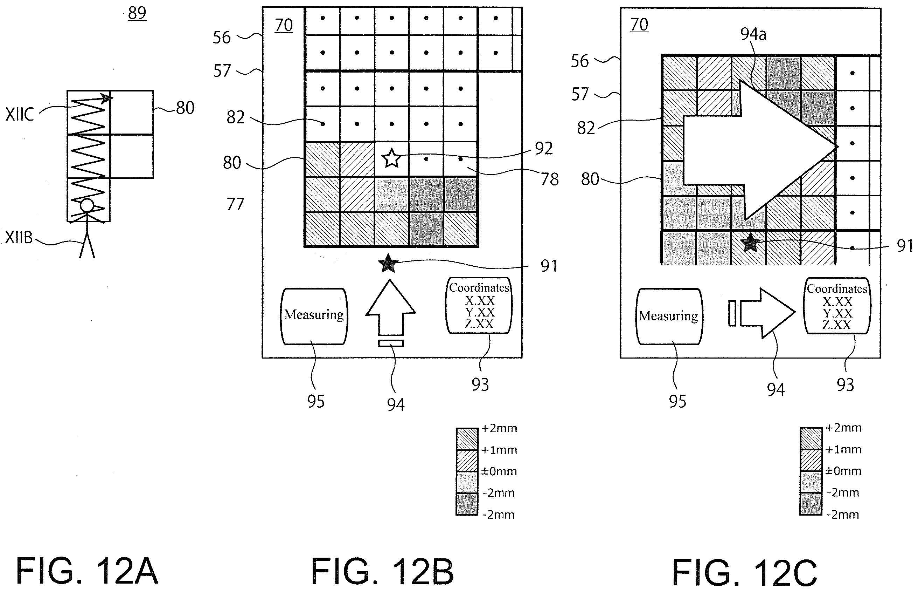

Then, when the electronic distance meter 52 emits the distance-measuring light L3 ("Yes" branch of step S14) according to an instruction from the operator OP or the control of the control arithmetic unit 60, in step 15, the control arithmetic unit 60 controls the electronic distance meter 52 to emit the distance-measuring light L3 in synchronization with measuring position coordinates of the prism 51, measures a distance from the measuring module 50 to the irradiated point Q, and calculates position coordinates of the irradiated point Q using the distance and the acquired posture information of the measuring module 50. Furthermore, the control arithmetic unit 60 displays the position of the irradiated point Q on the measurement screen 70 as an irradiated-point mark 92 in FIG. 12B.

Thereafter, in step S16, the control arithmetic unit 60 continuously repeats steps S12 to S15 until receiving a termination instruction.

Thus, the measuring module 50 constantly executes the above-described basic operation during three-dimensional data measurement.

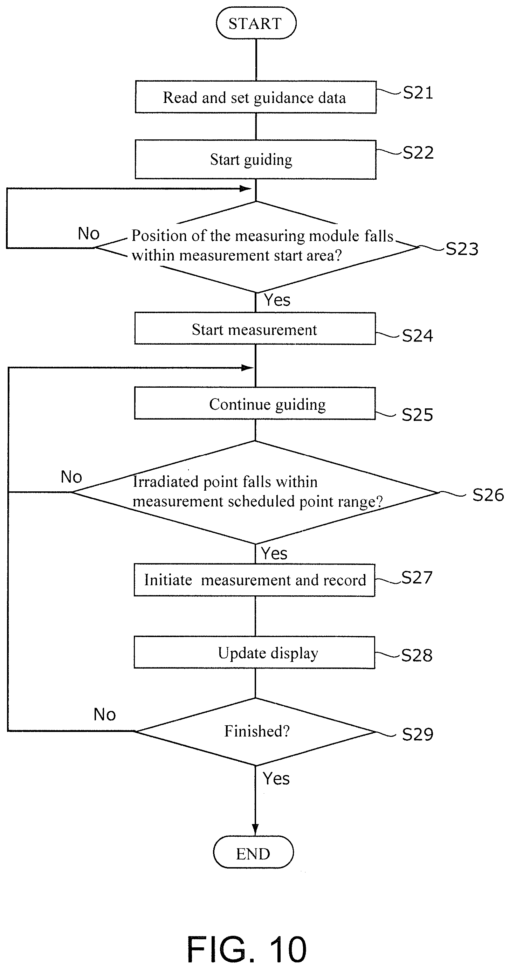

FIG. 10 is a flowchart showing an example of processing performed by the measuring module 50 during three-dimensional data measurement using the system 1. FIGS. 11B, 11C, 12B, and 12C depict the measurement screen 70. FIGS. 11A and 12A illustrate the relationship between the measurement routes and the operator's positions, corresponding to the measurement screens shown in FIGS. 11B, 11C, 12B, and 12C. In these figures, elements assigned with reference signs XIB, XIC, XIIB, and XIIC represent the position of the measuring module 50 corresponding to FIGS. 11B, 11C, 12B, and 12C, respectively.

The measurement screen 70 displays the survey area 7 including the measurement range 80. The measurement range 80 may be scalable as appropriate. The measurement screen 70 may display information including the scheduled measurement point 82, the own-location mark 91 representing the measurement position, and the irradiated-point mark 92 representing the position of the irradiated point Q. In addition, the measurement screen 70 may also display coordinate values 93 of the irradiated point Q corresponding to irradiated-point mark 92 on the measurement screen 70, which is being continuously detected during measurement.

Upon starting three-dimensional data measurement, in step S21, the control arithmetic unit 60 first reads the guidance data 90 from the storage unit 54. Here, if multiple sets of guidance data 90 are available, the control arithmetic unit 60 may select and set a set of the guidance data 90 having a first large section closest to a current own location of the measuring module 50.

Next, in step S22, the control arithmetic unit 60 starts guiding the operator OP to a measurement start zone SA. The measurement start zone SA is defined as an area in which the first large section is located within the measurable range 87 of the measuring module 50 held by the operator OP. Specifically, the control arithmetic unit 60 calculates a displacement between the position of the measuring module 50 and the measurement start zone SA, and displays a guidance marker 94 on the measurement screen 70 to guide the direction of the measuring module 50 toward the measurement start zone SA, as shown in FIG. 11B. The measurement screen 70 also displays, for example, the measurement range 80 including information on the small sections 81 and the large sections 88. The control arithmetic unit 60 may display the measurement range 80 superimposed on the survey area data 72. Means for guiding to the measurement start zone SA are not limited to the guidance marker 94. The measuring module 50 may include a speaker configured to provide voice guidance in addition to, or instead of, the display.

Next, in step S23, when the control arithmetic unit 60 determines that the position of the measuring module 50 has entered into the measurement start zone SA, the control arithmetic unit 60 starts measurement in step S24. Upon starting measurement, the control arithmetic unit 60 starts emitting the distance-measuring light L3 at predetermined intervals.

For example, when determining the measuring module 50 enters into the measurement start zone SA, the control arithmetic unit 60 displays a measurement status indicator 95 to indicate that the measurement is ready to start measurement, as shown in FIGS. 11A and 11C. Tapping, by the operator OP, the measurement status indicator 95 on the display unit 57 allows the measuring module 50 to start measurement.

Upon starting the measurement in step S24, the control arithmetic unit 60 further continues the guidance. Specifically, the control arithmetic unit 60 displays the guidance marker 94 to cause the operator OP to travel from the measurement start zone SA in a measurement direction along the set measurement route 89, as shown in FIGS. 12B and 12C. That is, the control arithmetic unit 60 displays the guidance marker 94 so that the measurable range 87 shifts along the measurement route 89, based on the current own location of the measuring module 50 and the current measurable range 87.

The operator OP travels while measuring distance by swinging the handheld measuring module 50 left and right, as indicated by a zigzag arrow in FIG. 12A. Since the electronic distance meter 52 emits visible laser light as the distance-measuring light L3, the operator OP can, while monitoring the measurement range 80 and the irradiated-point mark 92 on the measurement screen 70, visually check the measurement surface 84 and the irradiated point Q at the measurement site and proceed with the measurement.

During measurement, in step S26, the control arithmetic unit 60 determines whether the irradiated point Q falls within the scheduled-measurement-point range 83. Determining the irradiated point Q falls within the scheduled-measurement-point range 83 ("Yes" branch of step S26), in step S27, the control arithmetic unit 60 measures the irradiated point Q, calculates the position coordinates of the irradiated point Q, and stores the measurement result in the storage unit 54.

Determining the irradiated point Q falls outside the scheduled-measurement-point range 83 ("No" branch in S26), the control arithmetic unit returns to step S25. The operator OP moves the measuring module 50, while checking the irradiated-point mark 96, to cause the irradiated point Q to approach the scheduled measurement point 82 in the measurement direction.

After the control arithmetic unit 60 records the measurement value in step S27, the process proceeds to step S28, in which the control arithmetic unit 60 updates the measurement screen 70 to show measurement progress. FIG. 12B illustrates an example of the measurement screen 70 when the measurement is in progress. Specifically, the measurement screen 70 displays measured sections 77 and unmeasured sections 78 in different colors. More specifically, the unmeasured sections 78 may be displayed in a neutral color, while the measured sections 77 may be color-coded using a color scale based on height values (Z-coordinate values), allowing the operator OP to recognize a three-dimensional shape of the measured sections 77. In this embodiment, the system 1 is configured to display the three-dimensional data showing a three-dimensional shape of the measurement surface 84 in real time, enabling the operator OP to monitor the tree-dimensional shape.

Then, in step S29, the control arithmetic unit 60 repeats steps S25 to S28, continuing the measurement and guiding the operator OP along the measurement route 89, until it is determined that the measurement is completed.

Furthermore, as illustrated in FIG. 12C, when the operator OP reaches a turn in the measurement route 89, the control arithmetic unit 60 changes the display of the guidance marker 94 to indicate a direction in which the operator OP should turn along the measurement route 89. At this time, the control arithmetic unit 60 may, for example, display the guidance marker 94 as a highlighted mark 94a at the center of the screen. This allows the operator OP to intuitively recognize a traveling direction, thereby improving operability.

### 5. Technical Effects

Thus, this embodiment includes the measuring module 50 that comprises a prism 51, an electronic distance meter 52, and an inertial measurement unit 53 to acquire position coordinates of the prism 51. Consequently, moving the measuring module 50 in any posture allows acquisition of coordinates of the irradiated point of the measuring light. This enables three-dimensional data measurement without using a prism-equipped pole. Furthermore, since the system 1 is configured to acquire the own location of the measuring module 50 using the surveying instrument 10 rather than a GNSS receiver, the system 1 provides substantially equivalent measurement accuracy indoors and outdoors. Such configuration also eliminates the need to consider the number of satellites or a geometric configuration of the satellites.

Furthermore, the measuring module 50 preloads the data for the survey area 7 (survey area data 7a) and partitions the measurement range 80 into sections in a mesh manner at a predetermined pitch p, allowing the operator OP to scan the measurement range 80 with the distance measuring light L3 by moving the handheld measuring module 50 and automatically initiating measurement when the irradiated point of the distance-measuring light falls within the scheduled-measurement-range 83. This eliminates the need for the operator OP to stop and hold the pole stationary to measure the prism at each measurement point, thereby reducing workload and shortening operation time.

Moreover, in this embodiment, the system 1 generates the guidance data 90 by comparing the measurement range 80 with the measurable range 87 in which the measuring module 50 measures a distance with the required accuracy without having to travel, partitioning the measurement range 80 into large sections 88 having dimensions falling within the measurable range 87 when the measurement range 80 exceeds the measurable range 87, and setting the measurement route 89 to minimize a travel distance of the measuring module 50, i.e., a travel distance of the operator OP holding the measuring module 50, among the large sections 88, thereby improving work efficiency. In addition, as the measurement screen 70, during measurement, indicates guidance marker 94, which guides the operator OP of the travel direction, the operator OP only needs to proceed with the measurement according to the guidance marker 94, thereby reducing the operator OP's burden.

In addition, using visible light as the distance-measuring light in using the measuring module 50 allows the operator OP to observe the irradiated point Q of the distance-measuring light L3 on an object while moving the measuring module 50, thereby improving operability.

The measuring module 50 is configured to display the measurement screen 70 on the display unit 57 in a manner that the measured sections 77 are distinguishable from the unmeasured sections 78. This allows the operator OP to proceed with measurement while checking progress of the measurement. Furthermore, displaying the measured sections 77 using a color scale based on their height values allows the operator OP to recognize a three-dimensional shape of the measurement range visually and in real time.

In the above description, the data of the survey area 7 (the survey area data 7a) has been regarded as map data, and the measurement range as ground plane. As mentioned above, the survey area data 7a may also be design data including CAD data, and the survey area is not limited to the ground plane but may also be other surfaces, such as walls, structural surfaces, or ceilings. In addition, providing the measuring module 50 in a portable size allows measurement over various measurement ranges. Thus, the system 1 can measure three-dimensional data of various measurement objects for various applications.

### 6. Modification

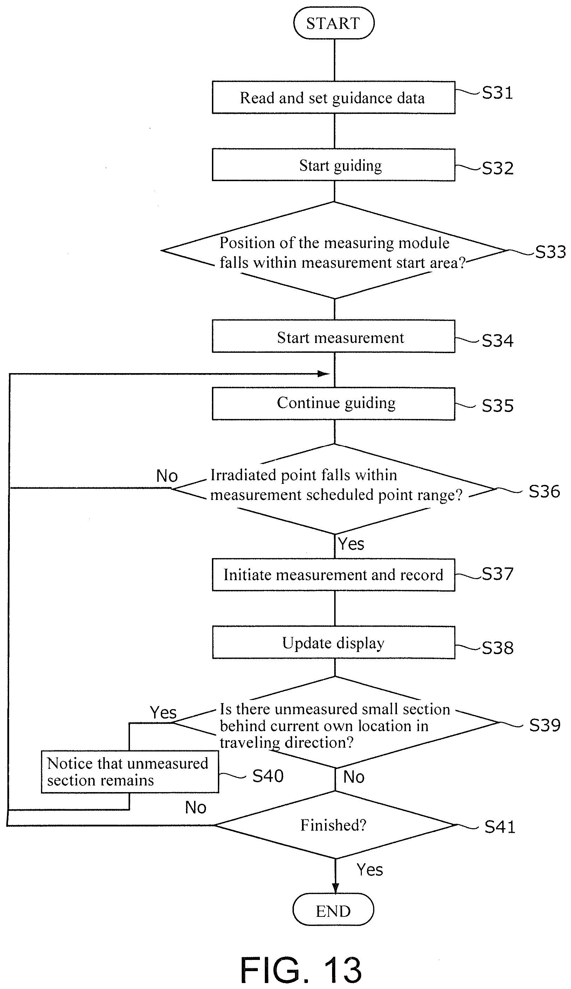

FIG. 13 illustrates another example of processing performed by the measuring module 50 during three-dimensional data measurement using the system 1. Steps S31 to S38 and S41 correspond respectively to steps S21 to S28 and S29. During the process of measurement while guiding the operator, when an unmeasured small section remains behind the operator OP in the traveling direction, the system 1 notifies the operator.

Specifically, after updating the display in step S38, in step S39, the control arithmetic unit 60 determines whether an unmeasured small section 81 remains behind the measurable range 87 associated with a current own location of the measuring module 50 in a traveling direction along the measurement route 89. When an unmeasured small section 81 remains ("Yes" branch for step S39), the control arithmetic unit 60 notifies the operator OP accordingly in step S40. The notification may include, for example, displaying this information on the display unit 57, providing an audio notification, and emitting a warning sound. This configuration enables complete measurement without omissions.

The foregoing describes preferred embodiments of the present invention. However, the above embodiments are provided for illustrative purpose only and do not limit the present invention. They can be combined based on the knowledge of those skilled in the art, and such forms are also included within the scope of the present invention.

### Reference Signs

- 1: :Three-dimensional data measuring system
- 7: : Survey area
- 10: : Surveying instrument
- 50: : Measuring module
- 51: : Prism
- 52: : Electronic distance meter
- 53: : Inertial measurement unit
- 57: : Display unit
- 58: : Communication unit
- 60: : Control arithmetic unit
- 76: : Measurement position
- 80: : Measurement range
- 81: : Small section
- 82: : Scheduled measurement point
- 84: : Measurement surface
- 87: : Measurable range
- 88: : Large cell
- 89: : Measurement route
- 90: : Guidance data
- 94: : Guidance marker
- L3: : Distance-measuring light

## Claims

1. A three-dimensional data measuring system comprising:
a measuring module including
a prism that retroreflects incident light,
an electronic distance meter configured to emit distance-measuring light toward a measurement range and receive reflected distance-measuring light from an irradiated point of the distance-measuring light, and to detect a distance to the irradiated point,
an inertial measurement unit that detects posture information,
a communication unit configured to receive prism position coordinates, and,
a control arithmetic unit configured to calculate position coordinates of the measuring module based on the prism position coordinates and the posture information, and calculate position coordinates of the irradiated point based on the position coordinates of the measuring module, the distance to the irradiated point, and the posture information; and
a surveying instrument configured to measure a distance to and angle of the prism to acquire the prism position coordinates, and transmit the prism position coordinates to the communication unit,
wherein the system is configured to acquire three-dimensional data of the measurement range, and
wherein the system is configured to, when the measurement range exceeds a measurable range in which the measuring module measures a distance with a required accuracy, partition the measurement range into sections in a mesh manner each section having dimensions within the measurable range, and perform measurement according to a guidance data in which a measurement route is set to minimize a travel distance of the measuring module among the sections.

2. The three-dimensional data measuring system according to claim 1, wherein the measurement route that minimizes the travel distance is a route that connects centers of all sections in a single stroke and includes fewest turns.

3. The three-dimensional data measuring system according to claim 1 or 2, wherein the measurable range is set depending on a distance between positions of the measuring module and the irradiated point on a measurement surface when the distance-measuring light impinges on the measurement surface at a threshold of incident angle, and the threshold is set depending on the required accuracy.

4. The three-dimensional data measuring system according to claim 1 or 2, wherein the measurable range is set depending on a three-dimensional shape of a measurement surface.

5. The three-dimensional data measuring system according to claim 1 or 2, further comprising a display unit,
wherein the control arithmetic unit is configured to display a guidance marker on the display unit to guide an operator who is holding the measuring module to travel in a traveling direction of measurement route set on the guidance data.

6. The three-dimensional data measuring system according to claim 1 or 2, wherein the control arithmetic unit is configured to notify an operator if an unmeasured scheduled measurement point remains behind a current location of the measuring module in a traveling direction of the measurement route during measurement.

7. A three-dimensional data measuring method using a three-dimensional data measuring system including:
a measuring module including a prism that retroreflects incident light, an electronic distance meter configured to emit distance-measuring light toward a measurement range and receive reflected distance-measuring light from an irradiated point of the distance-measuring light, and to detect a distance to the irradiated point, an inertial measurement unit that detects posture information, a communication unit configured to receive prism position coordinates, and, a control arithmetic unit configured to calculate position coordinates of the measuring module based on the prism position coordinates and the posture information to calculate position coordinates of the irradiated point based on the position coordinates of the measuring module, the distance to the irradiated point, and the posture information; and a surveying instrument configured to measure a distance to and angle of the prism to acquire the prism position coordinates, and transmit the prism position coordinates to the communication unit,
the system configured to acquire three-dimensional data of the measurement range,
the method comprising:
partitioning the measurement range into sections in a mesh manner each section having dimensions within the measurable range when the measurement range exceeds a measurable range in which the measuring module can measure a distance with a required accuracy, and
performing measurement according to a guidance data in which a measurement route is set to minimize a travel distance of the measuring module among the sections.
